# EUROPEAN PATENT APPLICATION

(11) **EP 4 723 596 A1**
(43) Date of publication of application: **08.04.2026**
(21) Application number: 24814599.7
(22) Date of filing: 31.05.2024
(51) Int. Cl.: H04L 65/75

(54) **MEDIA CONTENT EDITING METHOD AND APPARATUS, ELECTRONIC DEVICE, AND STORAGE MEDIUM**

(30) Priority: 02.06.2023 CN 202310652392
(71) Applicant: Beijing Zitiao Network Technology Co., Ltd., Beijing 100190 (CN)
(72) Inventor: ZHANG, Nuomeng, Beijing 100028 (CN); WANG, Xingyi, Beijing 100028 (CN)
(74) Representative: Grünecker Patent- und Rechtsanwälte PartG mbB
(86) International application number: PCT/CN2024/096697
(87) International publication number: WO 2024/245405

(57) **Abstract**

Provided in the embodiments of the present disclosure are a media content editing method and apparatus, an electronic device, and a storage medium. The method comprises: in an editing interface, displaying a preview image of a first material in target media content, the target media content containing at least one section of material; in response to a first trigger operation acting within the editing interface, displaying an adjustment interface, the adjustment interface corresponding to the material type of the first material, the adjustment interface being used for adjusting at least one of the duration and the frame of at least part of the materials in the target media content, the at least part of the materials comprising the first material, and the materials in the target media content comprising at least one of videos and pictures.

## Description

The present application claims priority of the Chinese Patent Application No. 202310652392.9, filed on June 2, 2023, the disclosure of which is incorporated herein by reference in its entirety as part of the present application.

### TECHNICAL FIELD

Embodiments of the present disclosure relate to an editing method for a media content, an editing apparatus for a media content, an electronic device, and a storage medium.

### BACKGROUND

At present, in some platforms, users can edit the media content they want to post, and after the editing is completed, the users post the media content obtained by editing. However, the editing method for a media content is relatively single.

### SUMMARY

Embodiments of the present disclosure provide an editing method for a media content, an editing apparatus for a media content, an electronic device and a storage medium.

Embodiments of the present disclosure provide an editing method for a media content, which includes:
displaying, in an editing interface, a preview image of a first material in a target media content, where the target media content includes at least one material;
in response to a first trigger operation acting on the editing interface, displaying an adjustment interface, where the adjustment interface corresponds to a material type of the first material, the adjustment interface is configured to adjust at least one selected from a group including a duration and a frame size of at least part of materials in the target media content, the at least part of materials include the first material, and a material in the target media content includes at least one selected from a group including a video and a picture.

An embodiment of the present disclosure further provides an editing apparatus for a media content, which includes an image preview module and an interface display module.

The image preview module is configured to display, in an editing interface, a preview image of a first material in a target media content, where the target media content includes at least one material.

The interface display module is configured to display an adjustment interface in response to a first trigger operation acting on the editing interface, where the adjustment interface corresponds to a material type of the first material, the adjustment interface is configured to adjust at least one selected from a group including a duration and a frame size of at least part of materials in the target media content, the at least part of materials include the first material, and the materials in the target media content include at least one selected from a group including a video and a picture.

An embodiment of the present disclosure further provides an electronic device, which includes one or more processor and a memory.

The memory is configured to store one or more programs.

When the one or more programs are executed by the one or more processor, the one or more processor implements the editing method for a media content according to the embodiments of the present disclosure.

An embodiment of the present disclosure further provides a computer-readable storage medium having computer program stored thereon, and when the program is executed by a processor, the editing method for a media content according to the embodiments of the present disclosure is implemented.

### BRIEF DESCRIPTION OF DRAWINGS

The above and other features, advantages, and aspects of each embodiment of the present disclosure may become more apparent by combining drawings and referring to the following specific implementation modes. In the drawings throughout, same or similar drawing reference signs represent same or similar elements. It should be understood that the drawings are schematic, and originals and elements may not necessarily be drawn to scale.
Fig. 1 is a schematic flow diagram of an editing method for a media content provided by an embodiment of the present disclosure;
Fig. 2 is a schematic display diagram of an editing interface provided by an embodiment of the present disclosure;
Fig. 3 is a schematic display diagram of a duration adjustment interface provided by an embodiment of the present disclosure;
Fig. 4 is a schematic display diagram of a frame size adjustment interface provided by an embodiment of the present disclosure;
Fig. 5 is a schematic display diagram of another duration adjustment interface provided by an embodiment of the present disclosure;
Fig. 6 is a schematic display diagram of another frame size adjustment interface provided by an embodiment of the present disclosure;
Fig. 7 is a schematic flow diagram of another editing method for a media content provided by an embodiment of the present disclosure;
Fig. 8 is a structural block diagram of an editing apparatus for a media content provided by an embodiment of the present disclosure; and
Fig. 9 is a schematic structural diagram of an electronic device provided by an embodiment of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be achieved in various forms and should not be construed as being limited to the embodiments described here. On the contrary, these embodiments are provided to understand the present disclosure more clearly and completely. It should be understood that the drawings and the embodiments of the present disclosure are only for exemplary purposes and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise explicitly stated in the context, it should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above process of notifying and obtaining the authorization of the user is only illustrative and does not constitute a limitation on the implementations of the present disclosure, and other manners that satisfy the relevant laws and regulations may also be applied in the implementations of the present disclosure.

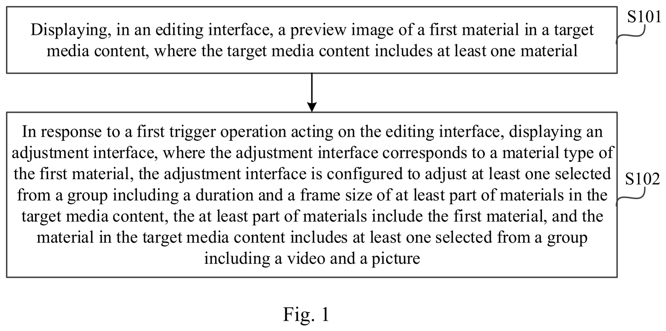

Fig. 1 is a schematic flow diagram of an editing method for a media content provided by an embodiment of the present disclosure. The method may be performed by an editing apparatus for media content, in which the apparatus may be implemented by software and/or hardware, and may be configured in an electronic device, for example, may be configured in a mobile phone or tablet computer. The editing method for a media content provided by the embodiment of the present disclosure is applicable to a scene in which a media content is edited, and is particularly applicable to a scene in which a media content including different types of materials is edited. As shown in Fig. 1, the editing method for a media content provided by the present embodiment may include S101 and S102.

S101: displaying, in an editing interface, a preview image of a first material in a target media content, where the target media content includes at least one material.

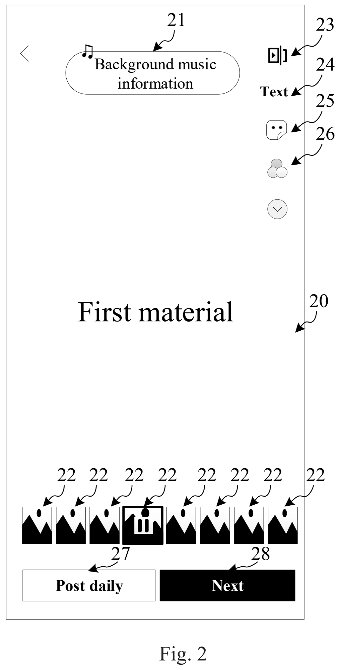

The editing interface may be an interface for editing a media content, the media content, for example, may include one or more materials, for example, a media content may include a plurality of videos and/or picture contents. After the media content is posted, other users can freely switch between the plurality of videos and/or picture contents through a swiping operation and the like when browsing the media content. As shown in Fig. 2, the editing interface may include a preview area 20 for displaying a preview image of a material and an information area 21 for displaying background music information in the target media content, and the editing interface may further display material information 22 of at least part of materials in the target media content and at least one control for editing the target media content. Here, the material information can be understood as information of a material, such as a thumbnail of the material. The at least one control for editing the target media content may include, for example, an adjustment control 23 for switching to an adjustment interface to edit a duration and/or a frame size of at least part of materials in the target adjust content, a text control 24 for adding text in the target media content, a sticker control 25 for adding a sticker in the target media content, a filter control 26 for adding a filter effect in the target media content, etc., so as to edit the target media content by a user. In addition, as shown in Fig. 2, a posting control 27 and a next control 28 may be further displayed in the editing interface, so that the user can post the target media content by triggering the posting control 27, and/or switch to the posting interface of the target media content by triggering the next control 28 to edit related information of the target media content in the posting interface and post the target media content.

The target media content may be a media content that is currently displayed in the editing interface, and may be the media content to be posted by a user or the posted media content. For example, the user can edit a media content before and/or after the media content is posted. The following is illustrated by using the target media content as an example of media content to be posted by the user. The target media content may include one or more materials for generating the target media content, and the present embodiment does not limit the type of the materials. For example, the material in the target media content may include at least one selected from a group including a video and a picture, in other words, the target media content may include at least one picture-type material and/or at least one video-type material.

The first material may be considered as a material currently viewed by the user in the editing interface. For example, the first material may be a material corresponding to the preview image displayed in the editing interface when the first trigger operation is received. For example, assuming that a preview image of a material A is displayed in the editing interface when the first trigger operation is received, the material A is the first material.

Specifically, the editing interface of the target media content may be displayed, and a preview image of a certain material in the target media content may be displayed in the editing interface of the target media content. For example, when the user triggers material information 22 of a certain material displayed in the editing interface, the preview image of the material is displayed in the preview area 20 of the editing interface. Alternatively, based on the arrangement sequence of the material in the target media content and/or the preview switching operation of the user, the preview images of different materials are switched to be displayed in the preview area 20 of the editing interface. Here, the preview switching operation may be understood as an operation for indicating to switch the currently previewed material, such as a horizontal swiping operation acting on the preview area 20, etc.

S102, in response to a first trigger operation acting on the editing interface, displaying an adjustment interface, where the adjustment interface corresponds to a material type of the first material, the adjustment interface is configured to adjust at least one selected from a group including a duration and a frame size of at least part of materials in the target media content, the at least part of materials include the first material, and a material in the target media content includes at least one selected from a group including a video and a picture.

Here, the first trigger operation may be considered as a trigger operation for indicating to display an adjustment interface of the target media content, such as an operation of triggering the adjustment control displayed in the editing interface, or a corresponding gesture operation acting on the editing interface, etc. The adjustment interface may be an interface for adjusting the duration and/or the frame size of at least part of materials in the target media content. The adjustment interface corresponds to the material type of the first material, and optionally, when the material types of the previewed materials in the editing interface are different, the adjustment interface displayed in response to the first trigger operation may not be exactly the same. The at least part of materials include the first material previewed by the user in the editing interface when the first trigger operation is received.

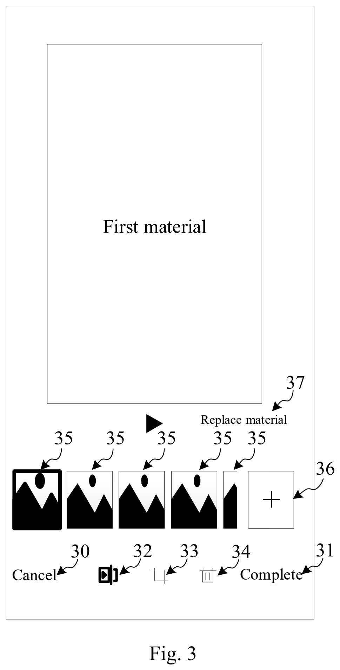

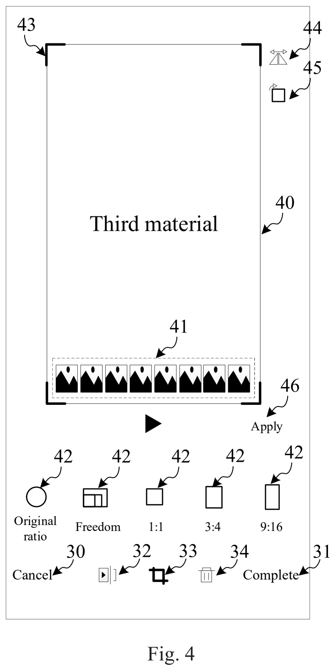

For example, when the first trigger operation acting on the editing interface is received, such as when it is detected that the user triggers the adjustment control 23 displayed in the editing interface (as shown in Fig. 2), the current interface may be switched from the editing interface to an adjustment interface corresponding to the material type of the first material, as shown in Fig. 3 and Fig. 4, so that the user adjusts the duration and/or the frame size of at least part of materials (such as the first material, etc.) of the target media content in the adjustment interface.

In addition, as shown in Fig. 3 and Fig. 4, when the adjustment interface is displayed in response to the first trigger operation, a preview image of the first material may be further displayed in the adjustment interface, so as to preview the first material currently displayed in the editing interface, and/or to adjust the duration and/or the frame of the first material.

Please continue to refer to Fig. 3 and Fig. 4, the adjustment interface may display a cancel control 30 for cancelling at least a portion of the adjustment operations that have been performed on at least part of materials in the adjustment interface, and/or a completion control 31 for indicating that the adjustment is completed and saving the at least part of the adjustment operations that are performed on at least part of materials in the adjustment interface. In addition, at least one selected from a group including a duration adjustment control 32, a frame size adjustment control 33 and a deletion control 34 may be further displayed in the adjustment interface, so that the user can indicate the current application to display a duration adjustment interface by triggering the duration adjustment control 32, indicate the current application to display a frame size adjustment interface by triggering the frame size adjustment control 33, and/or delete the material currently previewed in the adjustment interface from the target media content by triggering the deletion control 34.

In the present embodiment, when the first trigger operation is received, an adjustment interface corresponding to the material type of the material currently previewed by the user is displayed, which can enrich the adjustment mode of materials and the editing mode of the media content, and simplify the operation required by the user when editing the media content.

In some embodiments, the displaying an adjustment interface, includes at least one selected from a group including following: displaying a duration adjustment interface, and displaying, in a first area of the duration adjustment interface, an edit track segment and/or a thumbnail of the at least part of materials, where the edit track segment is displayed in a collapsed state; and displaying a frame size adjustment interface, and displaying, in a second area of the frame size adjustment interface, a preview image of the target media content and a progress control, where the progress control is configured to adjust preview progress of the target media content.

In the present embodiment, the adjustment interface may include a duration adjustment interface and/or a frame size adjustment interface. The duration adjustment interface may be an adjustment interface for adjusting the duration of at least part of materials in the target media content in the target media content. Exemplarily, for a video-type material, the duration adjustment interface may be configured to adjust the total playback duration of the material; and/or, for a picture-type material, the duration adjustment interface may be configured to adjust the total display duration of the material in the target media content. The frame size adjustment control may be an adjustment interface for adjusting the frame size of at least part of materials in the target media content, and the frame size may be, for example, an aspect ratio, such as an width-to-height ratio of a frame.

In the above embodiment, when the first trigger operation acting on the editing interface is received, the current interface may be switched from the editing interface to the duration adjustment interface in response to the first trigger operation, and an edit track segment 35 (as shown in Fig. 3) and/or a thumbnail of at least part of materials in the target media content may be displayed in the first area of the duration adjustment interface.

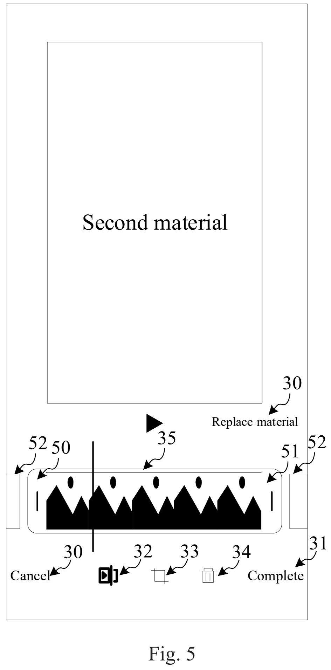

Here, the first area may be an area in the duration adjustment interface for displaying edit track segments and/or thumbnails. The edit track segment may be understood as an editing track corresponding to a material in the target media content, and the edit track segment may be configured to adjust the duration of the corresponding material. Exemplarily, different materials may correspond to different edit track segments. The edit track segment may have a collapsed state and an expanded state, and the display length of the edit track segment in the collapsed state may be smaller than the display length of the edit track segment in the expanded state. The present embodiment does not limit the display style of edit track segments. Optionally, when the edit track segment is in the collapsed state, the edit track segment may be displayed in the form of a thumbnail of the corresponding material, as shown in Fig. 3; and when the edit track segment is in the expanded state, the edit track segment may be displayed in the form of a thumbnail gallery of the corresponding material, as shown in Fig. 5.

In the above embodiment, when the first trigger operation acting on the editing interface is received, the current interface may be switched from the editing interface to the frame size adjustment interface in response to the first trigger operation, and the preview image of the target media content and the progress control may be displayed in the second area 40 of the frame size adjustment interface, as shown in Fig. 4 (in the figure, displaying the preview image of the third material in the target media content is used as an example).

Here, the second area may be an area in the frame size adjustment interface for displaying a preview image of the target media content and a progress control. Optionally, the second area includes an image display area of the target media content. For example, the second area may be an image display area of the target media content, and the image display area may be considered as an area in the frame size adjustment interface for displaying a preview image of the target media content. At this time, as shown in Fig. 2, the progress control may be displayed in a certain area (such as a certain area at the bottom of the second area) of the upper layer of the preview image displayed in the image display area.

In the present embodiment, as shown in Fig. 3, a preset control 36 and/or a material replacement control 37 may further be displayed in the duration adjustment interface. The preset control 36 may be considered to be a control displayed in the first area, such as a control displayed in the first area together with the edit track segment 35 and/or the thumbnail of the material. Exemplarily, the preset control 36 may be a material adding control, so that the user can switch to the material interface by triggering the preset control 36, and select, in the material interface, a new material that the user wants to add to the target media content. The material replacement control 37 may be a control for indicating to replace the material currently previewed in the duration adjustment interface, and the user can switch to the material interface by triggering the material replacement control 37, to select, in the material interface, the material that the user wants to use to replace the material currently previewed in the duration adjustment interface. Here, the material interface may be an interface for displaying candidate materials, such as a local album of a user.

In the present embodiment, the preset control may remain displayed in the first area of the duration adjustment interface when the duration adjustment interface is displayed. The display of the preset control may also be cancelled when a preset condition is satisfied, so as to facilitate the user to view a larger number of edit track segments in the first area or to increase the display size of the edit track segments.

The preset condition may be set as needed. Exemplarily, the preset condition may include: receiving a sequence adjustment operation acting on the duration adjustment interface and the execution of the sequence adjustment operation having not yet completed; alternatively, the duration adjustment interface including an edit track segment that is displayed in the expanded state. At this time, optionally, a preset control is further displayed in the first area, and after an edit track segment and/or a thumbnail of at least part of materials is displayed in the first area of the duration adjustment interface, the editing method further includes at least one selected from a group including following: arrangement sequence in response to a sequence adjustment operation acting on the duration adjustment interface, adjusting an arrangement sequence of the at least part of materials in the target media content, and cancelling displaying the preset control during an execution process of the sequence adjustment operation; and cancelling displaying the preset control in response to the second trigger operation for the first edit track segment.

Here, the sequence adjustment operation may be a trigger operation for indicating to adjust the arrangement sequence of one or more materials in the target media content, such as an operation of long-pressing and dragging an edit track segment or a thumbnail corresponding to a certain material displayed in the first area, or a gesture operation for indicating to adjust the arrangement sequence of one or more materials. Optionally, when long-pressing and dragging an edited track segment or a thumbnail, long-pressing and dragging for the edited track clip or the thumbnail may be executed continuously. The second trigger operation may be a trigger operation for indicating to switch one or more edit track segments in the collapsed state to the expanded state, such as an operation of clicking on an edit track segment displayed in the first area and in the collapsed state or other gesture operation. The first edit track segment may be considered as an edit track segment corresponding to the second trigger operation, such as an edit track segment on which the second trigger operation acts.

For example, when a sequence adjustment operation acting on the duration adjustment interface is received, for example, when a user is detected to long press and drag an edit track segment and/or a thumbnail of a certain material displayed in the first area, the edit track segment and/or the thumbnail can be controlled to move with the user's drag operation to adjust the arrangement sequence when the edit track segment and/or the thumbnail is displayed in the first area, and thus the arrangement sequence of the material corresponding to the edit track segment and/or the thumbnail in the target media content is adjusted, and the preset control can be cancelled during execution of the sequence adjustment operation. In addition, when the execution of the sequence adjustment operation is completed, the preset control may be re-displayed in the first area.

For example, when the second trigger operation for the first edit track segment is received, for example, when the user is detected to click on an edit track segment in the collapsed state in the first area, in response to the preset control being displayed in the first area, the display of the preset control may be cancelled in response to the second trigger operation, to leave more space for displaying the edit track segment, and the first edit track segment may be further switched from the collapsed state to the expanded state. In addition, when there is no edit track segment in the expanded state displayed in the first area, the preset control may be re-displayed in the first area.

In the present embodiment, the progress control may include a first progress control and a second progress control. The first progress control may be configured to adjust the preview progress of the first material, and exemplarily, the first progress control may be displayed in the style of a progress bar. The second progress control may be configured to switch the current material previewed in the frame size adjustment interface, and optionally, a second thumbnail corresponding to at least part of materials is displayed in the second progress control, and the second thumbnail is configured to trigger a preview image of the corresponding material to be displayed in the second area. Here, the second thumbnail may be considered as a thumbnail displayed in the second progress control, such as a thumbnail of at least part of materials in the target media content, which is displayed in the second progress control.

In the present embodiment, when the frame size adjustment interface is displayed, the same progress control, such as the first control or the second control, may be displayed in the frame size adjustment interface.

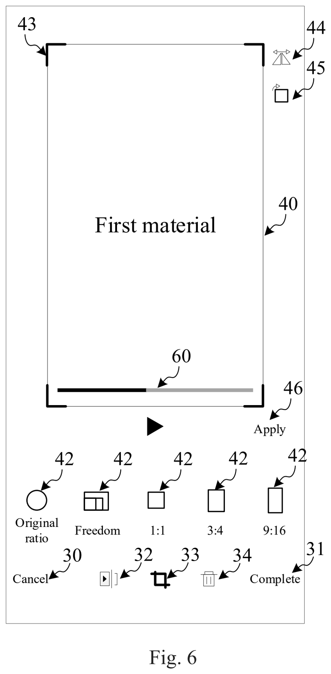

In the present embodiment, when the frame size adjustment interface is displayed, different progress controls may be displayed in the frame size adjustment interface on the basis that the number of materials included in the target media content is different, so as to meet different adjustment needs of users. For example, when only one material is included in the target media content, such as when only the first material previewed in the editing interface is included in the target media content, the preview image of the first material and the first progress control 60 are displayed in the second area 40 of the frame size adjustment interface, as shown in Fig. 6; and when the target media content includes a plurality of materials, a preview image of a certain material (such as a third material) and a second progress control 41 are displayed in the second area 40 of the frame size adjustment interface, as shown in Fig. 4.

At this time, optionally, the displaying, in a second area of the frame size adjustment interface, a preview image of the target media content and a progress control, includes at least one selected from a group including following: in response to the target media content including only one material, displaying, in the second area of the frame size adjustment interface, a preview image of a first material and a first progress control, where the first progress control is configured to adjust preview progress of the first material; and in response to the target media content including at least two materials, displaying, in the second area of the frame size adjustment interface, a preview image of a third material in the target media content and a second progress control, where the second progress control is configured to switch a current material previewed in the second area.

The third material may be understood as a material previewed in the frame size adjustment interface when the frame size adjustment interface is displayed in response to the first trigger operation, and may be any material in the target media content, such as a preset material or the first material. The preset material may be set in advance, for example, the preset material may be the n-th (n is a positive integer) material in the target media content. The current material can be considered as a material currently previewed in the frame size adjustment interface, such as the material of which the preview image is currently displayed in the frame size adjustment interface.

Thus, the user can adjust the preview progress of the first material by clicking on a certain position in the first progress control 60 or dragging the progress identifier in the first progress control 60; and/or indicate the current application to display a preview image of the material corresponding to the second thumbnail in the second area 40 by triggering the second thumbnail in the second progress control 41. At this time, exemplarily, after the displaying, in the second area of the frame size adjustment interface, a preview image of a third material in the target media content and a second progress control, the editing method further includes: in response to a fourth trigger operation for a target thumbnail in the second progress control, displaying, in a second area of the frame size adjustment interface, a preview image of a fourth material, where the fourth material is a material corresponding to the target thumbnail. The fourth trigger operation may be understood as an operation of triggering a certain second thumbnail in the second progress control. The target thumbnail may be considered as a second thumbnail corresponding to the fourth trigger operation, such as the second thumbnail on which the fourth trigger operation acts. The fourth material may be considered as a material corresponding to the target thumbnail, for example, a material to which the target thumbnail belongs.

In some embodiments, a user may perform different processing on the frame of the material in the frame size adjustment interface to meet different needs of the user. At this time, after the displaying, in a second area of the frame size adjustment interface, a preview image of the target media content and a progress control, the method further includes at least one selected from a group including following: in response to a first adjustment operation acting on the frame size adjustment interface, adjusting an aspect ratio of a current material to a target aspect ratio corresponding to the first adjustment operation; in response to a second adjustment operation acting on the frame size adjustment interface, mirroring a frame of the current material; and in response to a third adjustment operation acting on the frame size adjustment interface, controlling the frame of the current material to rotate by a preset angle along a preset direction.

Here, the first adjustment operation may be understood as a trigger operation for indicating to adjust the frame ratio of the current material. Exemplarily, as shown in Fig. 4 and Fig. 6, at least one scale control 42 and/or aspect ratio frame43 may be displayed in the frame size adjustment interface, and each scale control 42 may correspond to one or more aspect ratios. Thus, the first adjustment operation may include an operation of triggering a certain ratio adjustment control 42, and/or a trigger operation of adjusting the ratio of the aspect ratio frame 43. The target aspect ratio may be understood as an aspect ratio to which the first adjustment operation indicates to be adjusted. The second adjustment operation may be a trigger operation for indicating mirroring the frame of the current material, such as an operation of triggering the mirroring control 44 displayed in the frame size adjustment interface, etc. The third adjustment operation may be understood as a trigger operation for indicating adjust the display angle of the frame of the current material, such as an operation of triggering the rotation control 45 displayed in the frame size adjustment interface, etc. The preset direction and preset angle can be flexibly set, for example, the preset direction may be clockwise or counterclockwise; and the preset angle may be 30°, 45°, 60°, 90° or 180°, etc., which can be specifically set as needed.

For example, when the first adjustment operation is received, such as when the user is detected to trigger a certain ratio control 42 displayed in the frame size adjustment interface, the aspect ratio frame 43 may be adjusted to a ratio (e.g., width-to-height ratio) corresponding to the ratio control 42; and/or, when a user is detected to drag a certain corner or a certain boundary of the aspect ratio frame 43, the corresponding boundary of the aspect ratio frame 43 may be controlled to move with the user's dragging to adjust the ratio of the aspect ratio frame 43. Thus, the aspect ratio of the current material is adjusted to the same aspect ratio as that of the aspect ratio frame. For example, based on the first trigger operation of the user or the operation of triggering the completion control 31 in the frame size adjustment interface by the user, a picture or a video frame in the current material is cropped, to adjust the aspect ratio of the current material to the target aspect ratio that is the same as that of the aspect ratio frame.

When the second adjustment operation is received, such as when the user is detected to trigger the mirroring control 44 displayed in the frame size adjustment interface, mirroring processing may be performed on a picture or a video frame in the current material, and a preview image after the mirroring processing may be displayed in the second area 40.

When the third adjustment operation is received, such as when the user is detected to trigger the rotation control 45 displayed in the frame size adjustment interface, a picture or a video frame in the current material may be controlled to be rotated by a preset angle along a preset direction, and the preview image after rotation may be displayed in the second area 40.

In the present embodiment, after the user adjusts the aspect ratio of a certain material in the frame size adjustment interface, the executed adjustment operation may further be applied to one or more materials in the target media content other than the material, for example, the aspect ratio of some or all materials other than the material is also adjusted to the target aspect ratio, so as to avoid a situation in which the user needs to individually adjust the aspect ratio of each material, and simplify the operation required by the user when adjusting the aspect ratio of the target media content.

At this time, after the adjusting an aspect ratio of a current material to a target aspect ratio corresponding to the first adjustment operation, the method further includes: in response to a fourth adjustment operation acting on the frame size adjustment interface, adjusting an aspect ratio of at least part of materials in the target media content other than the current material to the target aspect ratio.

Here, the fourth adjustment operation may be understood as a trigger operation for indicating to adjust the aspect ratio of at least part of materials other than the current material to the same target aspect ratio as the current material, such as an operation of triggering the applying control displayed in the frame size adjustment interface.

Exemplarily, when the fourth adjustment operation is received, as when the user is detected to trigger the applying control 46 displayed in the frame size adjustment interface (as shown in Fig. 4 and Fig. 6), the aspect ratio of at least part of materials in the target media content other than the current material may be adjusted to the target aspect ratio.

Here, the at least part of materials may be a preset material or a material determined based on a user's selection. The present embodiment does not limit the preset material, and for example, the preset material may include a previous material and/or a next material of the current material in the target media content, a material positioned before the current material and/or a material positioned after the current material in the target media content, etc. When the at least part of materials to be adjusted are determined based on the user's selection. For example, when the fourth adjustment operation is received, a material panel may be displayed, and the material information of one or more materials in the target media content may be displayed in the material panel for the user to select, and after the user's selection is completed, the aspect ratio of the material selected by the user is adjusted to the target aspect ratio.

In some embodiments, when the first trigger operation acting on the editing interface of the target media content is received, an adjustment interface to be displayed in response to the first trigger operation may be determined according to the type of the first material currently previewed in the editing interface. For example, when the first material is a material of a first type, a duration adjustment interface may be displayed in response to the first trigger operation; and when the first material is a material of a second type, a frame size adjustment interface may be displayed in response to the first trigger operation. At this time, optionally, the displaying an adjustment interface includes: in response to the material type of the first material being a first type, displaying a duration adjustment interface; and in response to the material type of the first material being a second type, displaying a frame size adjustment interface. Here, the first type and the second type may be set as needed, and for example, the first type may be a video-type, and the second type may be a picture-type, so that when the first material is a video, the duration adjustment interface may be displayed, and when the first material is a picture, the frame size adjustment interface may be displayed.

In the editing method for a media content according to the present embodiment, a preview image of a first material in a target media content is displayed in an editing interface, and the target media content includes at least one material; in response to a first trigger operation acting on the editing interface, an adjustment interface is displayed, the adjustment interface corresponds to a material type of the first material, the adjustment interface is configured to adjust a duration and a frame size of at least part of materials in the target media content, the at least part of materials include the first material, and a material in the target media content includes at least one selected from a group including a video and a picture. In the present embodiment, by using the above technical solution, by displaying the adjustment interface corresponding to the material type of a material currently previewed by the user, the adjustment mode of materials and the editing mode of media contents can be enriched, and the operation required by the user when editing a media content can be simplified.

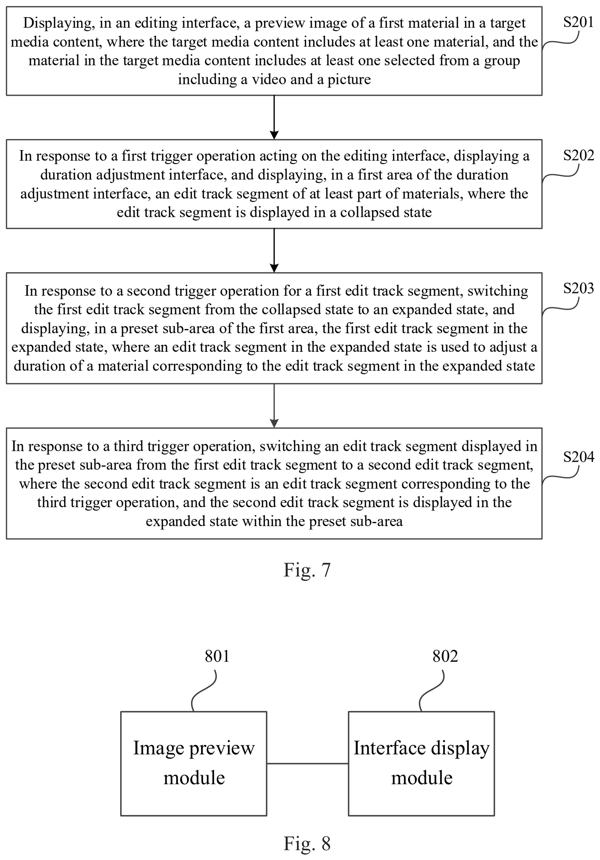

Fig. 7 is a schematic flow diagram of another editing method for a media content according to an embodiment of the present disclosure. The scheme in the present embodiment may be combined with one or more of the alternative schemes in the above embodiments. Optionally, after the displaying, in a first area of the duration adjustment interface, an edit track segment and/or a thumbnail of the at least part of materials, the method further includes: in response to a second trigger operation for a first edit track segment, switching the first edit track segment from the collapsed state to an expanded state, and displaying, in a preset sub-area of the first area, the first edit track segment in the expanded state, where an edit track segment in the expanded state is used to adjust a duration of a material corresponding to the edit track segment in the expanded state.

Optionally, after the displaying, in a preset sub-area of the first area, the first edit track segment in the expanded state, the method further includes: in response to a third trigger operation, switching an edit track segment displayed in the preset sub-area from the first edit track segment to a second edit track segment, where the second edit track segment is an edit track segment corresponding to the third trigger operation, and the second edit track segment is displayed in the expanded state within the preset sub-area.

Accordingly, as shown in Fig. 7, the editing method for a media content provided by the present embodiment may include S201, S202, S203 and S204.

S201: displaying, in an editing interface, a preview image of a first material in a target media content, where the target media content includes at least one material, and the material in the target media content includes at least one selected from a group including a video and a picture.

S202: in response to a first trigger operation acting on the editing interface, displaying a duration adjustment interface, and displaying, in a first area of the duration adjustment interface, an edit track segment of at least part of materials, where the edit track segment is displayed in a collapsed state.

In the present embodiment, when the first trigger operation is received, the current interface may be switched from the editing interface to the duration adjustment interface, and the edit track segment 35 of the at least part of materials may be displayed in a collapsed state in the first area of the duration adjustment interface, for example, the edit track segment 35 of the at least part of materials may be displayed as a thumbnail of the corresponding material, as shown in Fig. 3.

The thumbnail of the edit track segment in the collapsed state displayed as may be a thumbnail associated with the material corresponding to the edit track segment, and for example, when the corresponding material is a picture, the thumbnail may be a thumbnail of the corresponding material, that is, a thumbnail of the picture. When the corresponding material is a video, the thumbnail may be a thumbnail of a video cover or a thumbnail of a certain frame in the video.

S203: in response to a second trigger operation for a first edit track segment, switching the first edit track segment from the collapsed state to an expanded state, and displaying, in a preset sub-area of the first area, the first edit track segment in the expanded state, where an edit track segment in the expanded state is used to adjust a duration of a material corresponding to the edit track segment in the expanded state.

Here, the second trigger operation may be a trigger operation for indicating to switch an edit track segment in the collapsed state to the expanded state, such as a trigger operation for indicating to display a certain edit track segment as an expanded state in the preset sub-area when there is no edit track segment in the expanded state displayed in the preset sub-area. The execution mode of the second trigger operation is not limited, and for example, the second trigger operation may be an operation of clicking a certain edit track segment displayed in the first area when all the edit track segments displayed in the first area are in the collapsed state. The first edit track segment may be considered as an edit track segment corresponding to the second trigger operation, such as an edit track segment indicated by the second trigger operation to switched to the expanded state. The preset sub-area may be understood as a sub-area in the first area that is used for displaying the segment track segment in the expanded state, which can be set as needed, and the preset sub-area may be, for example, a certain sub-area positioned in the middle of the first area.

For example, when the second trigger operation for the first edit track segment is received, the first edit track segment may be switched from the collapsed state to the expanded state, the first edit track segment in the expanded state may be displayed in the preset sub-area in the first area, and a preview image of a material (such as a second material) corresponding to the first editing track may be further displayed in the duration adjustment interface, as shown in Fig. 5. Thus, the user can adjust the duration of the material corresponding to the first edit track segment by dragging the left boundary area 50 or the right boundary area 51 of the first edit track segment, such as shortening the duration of the material corresponding to the first edit track segment by dragging the left boundary area 50 to the right or dragging the right boundary area 51 to the left; and/or, the duration of the material corresponding to the first edit track segment is increased by dragging the left boundary area 50 to the left or dragging the right boundary area 51 to the right.

In the present embodiment, the display style of the edit track segment in the expanded state is not limited, and optionally, the edit track segment in the expanded state may be displayed in the style of a thumbnail gallery, so that the user can quickly determine the material frame corresponding to each position of the edit track segment. The thumbnail gallery may be a thumbnail gallery corresponding to the material corresponding to the edit track segment in the expanded state, and the thumbnail gallery may include at least two thumbnails. For example, when the material corresponding to the edit track segment in the expanded state is a video, the thumbnail gallery may include thumbnails of at least part of video frames in the material, such as a thumbnail of a key frame in the material; and when the material corresponding to the segment of the editing track in the expanded state is a picture, the thumbnail gallery may include a plurality of thumbnails of the material, and the frame displayed by each thumbnail may be the same or different.

In some implementations, the edit track segment when in the collapsed state is displayed as a thumbnail style; and the switching the first edit track segment from the collapsed state to an expanded state includes: expanding a first thumbnail displayed by the first edit track segment in the collapsed state into a first thumbnail gallery, where the first thumbnail gallery corresponds to a plurality of key frames of a second material, and the second material is a material corresponding to the first edit track segment.

In the above-described embodiment, the edit track segment in the collapsed state may be displayed as a thumbnail style, and the edit track segment in the expanded state may be displayed as a thumbnail gallery style. Thus, when the second trigger operation for the first edit track segment is received, the first edit track segment may be expanded from the first thumbnail to the first thumbnail gallery, so as to switch the first edit track segment from the collapsed state to the expanded state.

The second material may be a material corresponding to the first edit track segment, in other words, the first edit track segment may be an edit track segment of the second material. The first thumbnail may be considered as a thumbnail displayed by the first edit track in the collapsed state, and the thumbnail may be a thumbnail associated with the second material. The first thumbnail gallery may be considered as a thumbnail gallery displayed by the first edit track segment in the expanded state, and the thumbnail gallery may be a set of at least part of thumbnails associated with the second material, such as a thumbnail gallery corresponding to key frames in the second material.

In the present embodiment, optionally, user swipe switching is supported between a thumbnail gallery displayed by the edit track segment in the expanded state and a thumbnail displayed by the edit track segment in the collapsed state.

For example, as shown in Fig. 5, when the edit track segment 35 (such as the first edit track segment) in the expanded state is displayed in the preset sub-area, the user can switch the current material by swiping, such as switching the current material to the next material of the current material in the target media content by swiping to the left in the duration adjustment interface or the first area, and/or switching the current material to the previous material of the current material in the target media content by swiping to the right in the duration adjustment interface or the first area, etc.

For another example, the user can switch the edit track segment currently displayed in the preset sub-area and in the expanded state by swiping, such as controlling each thumbnail (including the thumbnails in the thumbnail gallery) displayed in the first area to move to the left by swiping to the left in the first area, so as to switch the edit track segment currently displayed in the preset sub-area and in the expanded state to the next edit track segment of the currently displayed edit track segment 35; controlling each thumbnail (including a thumbnail in the thumbnail gallery) displayed in the first area to move to the right by swiping to the right in the first area, so as to switch the edit track segment currently displayed in the preset sub-area and in the expanded state to the previous edit track segment of the currently displayed edit track segment 35. It can be understood that when switching to the next edit track segment, the next edit track segment is still in the expanded state, so as to facilitate editing by the user.

In the present embodiment, when the first edit track segment is switched from the collapsed state to the expanded state in response to the second trigger operation, the display of the other edit track segments displayed in the first area except the first edit track segment may be cancelled, or the display position of the other edit track segments displayed in the first area except the first edit track segment may be adjusted according to the display position of the first edit track segment, so as to avoid overlapping display of the first edit track segment with the other segment track segments after the first edit track segment is expanded, and to facilitate the user to view and adjust each edit track segment. At this time, the editing method for a media content provided by the present embodiment may further include: in response to the second trigger operation for the first edit track segment, cancelling displaying an edit track segment in the duration adjustment interface other than the first edit track segment; or in response to the second trigger operation for the first edit track segment, adjusting a display position of an edit track segment in the duration adjustment interface other than the first edit track segment according to a display position of the first edit track segment.

In the present embodiment, the mode of adjusting a display position of an edit track segment in the duration adjustment interface other than the first edit track segment according to a display position of the first edit track segment may be set as needed. Optionally, the adjusting a display position of an edit track segment in the duration adjustment interface other than the first edit track segment according to a display position of the first edit track segment includes: controlling an edit track segment positioned on a first side of the first edit track segment to move outside the preset sub-area in a first direction, and/or controlling an edit track segment positioned on a second side of the first edit track segment to move outside the preset sub-area in a second direction.

The first side and the second side, as well as the first direction and the second direction, can be set as needed. Exemplarily, the first side and the second side may be two corresponding sides, and the first direction and the second direction may be two opposite directions. The first direction may be a direction corresponding to the first side, such as a direction from the first edit track segment to an edit track segment positioned on the first side of the first edit track segment. The second direction may be a direction corresponding to the second side, such as a direction from the first edit track segment to an edit track segment positioned on the second side of the first edit track segment.

In the above embodiment, when the first edit track segment is switched from the collapsed state to the expanded state, the edit track segment positioned on the first side of the first edit track segment may be further controlled to move outside the preset sub-area in the first area in the first direction, and/or the edit track segment positioned on the second side of the first edit track segment may be further controlled to move outside the preset sub-area in the first area in the second direction.

For example, each edit track segment is arranged horizontally and the first edit track segment is a horizontal edit track segment when in the expanded state, when the first edit track segment is switched from the collapsed state to the expanded state, the edit track segment displayed on the left side of the first edit track segment in the first area may be further controlled to move left outside the preset sub-area; and/or the edit track segment displayed on the right side of the first edit track segment in the first area may be controlled to move right outside the preset sub-area, so as to display the first edit track segment in the expanded state in the preset sub-area.

S204: in response to a third trigger operation, switching an edit track segment displayed in the preset sub-area from the first edit track segment to a second edit track segment, where the second edit track segment is an edit track segment corresponding to the third trigger operation, and the second edit track segment is displayed in the expanded state within the preset sub-area.

The third trigger operation may be a trigger operation used to indicate to switch the edit track segment in the expanded state in the preset sub-area. The execution mode of the third trigger operation is not limited, and optionally, the third trigger operation includes a preset swiping operation acting on the preset sub-area, a trigger operation for the second edit track segment, or a trigger operation acting on an associated sub-area corresponding to the second edit track segment, and the associated sub-area is a sub-area associated with the preset sub-area.

Here, the preset swiping operation may be a swiping operation acting on the preset sub-area, such as an operation of swiping in the preset sub-area along the arrangement direction of each editing track segment. The trigger operation for a certain edit track segment (such as a second edit track segment) may be, for example, an operation of triggering an edit track segment other than the first edit track segment, such as an operation of triggering an edit track segment displayed outside the preset sub-area. The trigger operation acting on the associated sub-area may be, for example, an operation of triggering an associated sub-area of the preset sub-area, such as a click operation. The associated sub-area may be an area associated with the preset sub-area, and may be positioned within the preset sub-area or outside the preset sub-area. the following is illustrated by using the associated sub-area positioned outside the preset sub-area as an example. At this time, the associated sub-area may be a sub-area in the first area, positioned outside the preset sub-area and associated with the preset sub-area, such as a sub-area positioned around the preset sub-area.

The second edit track segment may be understood as an edit track segment to which the third trigger operation indicates to switch, such as an edit track segment corresponding to the swiping direction of the third trigger operation, an edit track segment acted on by the third trigger operation, or an edit track segment corresponding to an associated sub-area acted on by the third trigger operation.

In the present embodiment, when the third trigger operation is received, the edit track segment displayed in the preset sub-area and in the expanded state may be switched based on the third trigger operation, so that the user can preview the materials corresponding to different edit track segments or adjust the duration of different materials.

For example, when the user is detected to perform a preset swiping operation within the preset sub-area, the third trigger operation may be determined to be received, and the edit track segment in the expanded state in the preset trigger operation may be switched according to the swiping direction of the third sub-area. Using the preset swiping operation being the horizontal swiping operation as an example, when the user is detected to swipe to the left in the preset sub-area, the edit track segment of the next material of the current material (such as the second material) in the target media content may be determined as the second edit track segment, and the edit track segment displayed in the preset sub-area and in the expanded state is switched from the edit track segment of the current material (such as the first edit track segment) to the second edit track segment; and when the user is detected to swipe to the right in the preset sub-area, the edit track segment of the previous material of the current material (such as the second material) in the target media content may be determined as the second edit track segment, and the edit track segment displayed in the preset sub-area and in the expanded state may be switched from the edit track segment of the current material (such as the first edit track segment) to the second edit track segment.

When the user is detected to trigger a certain edit track segment displayed outside the preset sub-area, the third trigger operation may be determined to be received, the edit track segment triggered by the third trigger operation is determined as the second edit track segment, and the edit track segment displayed in the preset sub-area and in the expanded state is switched from the edit track segment of the current material (such as the first edit track segment) to the second edit track segment.

When the user is detected to trigger a certain associated sub-area 52 of the preset sub-area, it may be determined that the third trigger operation is received, the edit track segment corresponding to the associated sub-area 52 is determined as the second edit track segment, and the edit track segment displayed in the preset sub-area and in the expanded state may be switched from the edit track segment of the current material (such as the first edit track segment) to the second edit track segment. Here, the association between the associated sub-area 52 and the editing track segment can be set flexibly, using each edit track segment 35 arranged horizontally as an example. As shown in Fig. 5, the preset sub-area may have two associated sub-areas 52 positioned on the left side and right side of the preset sub-area. At this time, the edit track segment corresponding to the associated sub-area 52 on the left side of the preset sub-area may be an edit track segment positioned on the left side of the first edit track segment and adjacent to the first edit track segment (not shown in Fig. 5), and the edit track segment corresponding to the associated sub-area 52 on the right side of the preset sub-area may be an edit track segment positioned on the right side of the first edit track segment and adjacent to the first edit track segment (not shown in Fig. 5).

In some embodiments, when the edit track segment is in the expanded state, the edit track segment may be displayed in the style of a thumbnail gallery, so that when switching the edit track segment in the expanded state in the preset sub-area, the thumbnail gallery displayed in the preset sub-area may be switched, for example, the thumbnail gallery displayed in the preset sub-area is switched from the first thumbnail gallery to the second thumbnail gallery. At this time, optionally, the edit track segment is displayed as a thumbnail gallery when the edit track segment is in the expanded state, and the switching an edit track segment displayed in the preset sub-area from the first edit track segment to a second edit track segment includes: switching a first thumbnail gallery displayed in the preset sub-area to a second thumbnail gallery, where the first thumbnail gallery is a thumbnail gallery displayed when the first edit track segment is in the expanded state, and the second thumbnail gallery is a thumbnail gallery displayed when the second editing track is in the expanded state.

The editing method for a media content provided by the present embodiment supports a user to switch an edit track segment in a collapsed state to an expanded state or switch an edit track segment in the expanded state, and adjusts the duration of a material corresponding to the edit track segment in the expanded state through the edit track segment in the expanded state, thereby further enriching the display mode of the edit track segment and the adjustment mode of the duration of the material.

Fig. 8 is a structural block diagram of an editing apparatus for a media content provided by an embodiment of the present disclosure. The apparatus may be implemented by software and/or hardware, may be configured in an electronic device, for example, may be configured in a mobile phone or tablet computer, and may edit a media content by performing an editing method for a media content, such as editing a media content including different types of materials. As shown in Fig. 8, the editing apparatus for a media content provided by the present embodiment may include an image preview module 801 and an interface display module 802.

The image preview module 801 is configured to display, in an editing interface, a preview image of a first material in a target media content, where the target media content includes at least one material.

The interface display module 802 is configured to display an adjustment interface in response to a first trigger operation acting on the editing interface, where the adjustment interface corresponds to a material type of the first material, the adjustment interface is configured to adjust at least one selected from a group including a duration and a frame size of at least part of materials in the target media content, the at least part of materials include the first material, and a material in the target media content includes at least one selected from a group including a video and a picture.

The editing apparatus for a media content provided by the present embodiment displays, in an editing interface, a preview image of a first material in a target media content through an image preview module, where the target media content includes at least one material; displays, through an interface display module, an adjustment interface in response to a first trigger operation acting on the editing interface, where the adjustment interface corresponds to a material type of the first material, the adjustment interface is configured to adjust at least one selected from a group including a media content and a frame size of at least part of materials in the target media content, the at least part of materials includes the first material, the material in the target media content includes at least one selected from a group including a video and a picture. In the present embodiment, by using the above technical solution, by displaying the adjustment interface corresponding to the material type of a material currently previewed by the user, the adjustment mode of materials and the editing mode of media contents can be enriched, and the operation required by the user when editing a media content can be simplified.

In the above scheme, the interface display module 802 includes at least one of the following: a first interface display unit for displaying a duration adjustment interface, and displaying, in a first area of the duration adjustment interface, an edit track segment and/or a thumbnail of the at least part of materials, where the edit track segment is displayed in a collapsed state; and a second interface display unit for displaying a frame size adjustment interface, and displaying, in a second area of the frame size adjustment interface, a preview image of the target media content and a progress control, where the progress control is configured to adjust preview progress of the target media content.

Furthermore, the editing apparatus for a media content provided by the present embodiment may further include a state switching module. After displaying, in a first area of the duration adjustment interface, an edit track segment and/or a thumbnail of the at least part of materials, the state switching module is configured to, in response to a second trigger operation for a first edit track segment, switch the first edit track segment from the collapsed state to an expanded state, and display, in a preset sub-area of the first area, the first edit track segment in the expanded state, where an edit track segment in the expanded state is used to adjust a duration of a material corresponding to the edit track segment in the expanded state.

In the above scheme, the edit track segment may be displayed in a form of a thumbnail when in the collapsed state; and the state switching module may be configured to expand a first thumbnail displayed by the first edit track segment in the collapsed state into a first thumbnail gallery, where the first thumbnail gallery corresponds to a plurality of key frames of a second material, and the second material is a material corresponding to the first edit track segment.

**In** the above scheme, user swipe switching is supported between a thumbnail gallery displayed by the edit track segment in the expanded state and a thumbnail displayed by the edit track segment in the collapsed state.

In the above scheme, the state switching module may be further configured to: in response to the second trigger operation for the first edit track segment, cancel displaying an edit track segment in the duration adjustment interface other than the first edit track segment; or in response to the second trigger operation for the first edit track segment, adjust a display position of an edit track segment in the duration adjustment interface other than the first edit track segment according to a display position of the first edit track segment.

In the above scheme, the state switching module may be configured to control an edit track segment positioned on a first side of the first edit track segment to move outside the preset sub-area in a first direction, and/or control an edit track segment positioned on a second side of the first edit track segment to move outside the preset sub-area in a second direction.

Furthermore, the editing apparatus for a media content provided by the present embodiment may further include a track switching module. After the displaying, in a preset sub-area of the first area, the first edit track segment in the expanded state, the track switching module is configured to in response to a third trigger operation, switch an edit track segment displayed in the preset sub-area from the first edit track segment to a second edit track segment, where the second edit track segment is an edit track segment corresponding to the third trigger operation, and the second edit track segment is displayed in the expanded state within the preset sub-area.

In the above scheme, the edit track segment when in the expanded state is displayed in a thumbnail gallery style, the track switching module may be configured to switch a first thumbnail gallery displayed in the preset sub-area to a second thumbnail gallery, where the first thumbnail gallery is a thumbnail gallery displayed when the first edit track segment is in the expanded state, and the second thumbnail gallery is a thumbnail gallery displayed when the second editing track is in the expanded state.

In the above scheme, the third trigger operation includes a preset swiping operation acting on the preset sub-area, a trigger operation for the second edit track segment, or a trigger operation acting on an associated sub-area corresponding to the second edit track segment, and the associated sub-area is a sub-area associated with the preset sub-area.

In the above scheme, a preset control is further displayed in the first area, and the editing apparatus for a media content provided by the present embodiment may further include at least one selected from a group including a sequential adjustment module and a cancel display module. The sequential adjustment module is configured to in response to a sequence adjustment operation acting on the duration adjustment interface, adjust an arrangement sequence of the at least part of materials in the target media content, and cancel displaying the preset control during an execution process of the sequence adjustment operation. The cancel display module is configured to cancel displaying the preset control in response to the second trigger operation for the first edit track segment.

In the above scheme, the second interface display unit may be configured to perform at least one selected from a group including following: in response to the target media content including only one material, displaying, in the second area of the frame size adjustment interface, a preview image of a first material and a first progress control, where the first progress control is configured to adjust preview progress of the first material; and in response to the target media content including at least two materials, displaying, in the second area of the frame size adjustment interface, a preview image of a third material in the target media content and a second progress control, where the second progress control is configured to switch a current material previewed in the second area.

In the above scheme, the second area includes an image display area of the target media content.

In the above scheme, a second thumbnail corresponding to the at least part of materials is displayed in the second progress control, and the second thumbnail is used to trigger a preview image of displaying a corresponding material in the second area.

Furthermore, the editing apparatus for a media content provided by the present embodiment may further include an image display module. After the displaying, in the second area of the frame size adjustment interface, a preview image of a third material in the target media content and a second progress control, the image display module is configured to in response to a fourth trigger operation for a target thumbnail in the second progress control, display, in a second area of the frame size adjustment interface, a preview image of a fourth material, where the fourth material is a material corresponding to the target thumbnail.

Furthermore, the editing apparatus for a media content provided by the present embodiment may further include at least one selected from a group including a first ratio adjustment module, a mirroring processing module and a rotation module. After the displaying, in a second area of the frame size adjustment interface, a preview image of the target media content and a progress control, the first ratio adjustment module is configured to in response to a first adjustment operation acting on the frame size adjustment interface, adjust an aspect ratio of a current material to a target aspect ratio corresponding to the first adjustment operation. After the displaying, in a second area of the frame size adjustment interface, a preview image of the target media content and a progress control, the mirroring processing module is configured to mirror a frame of the current material in response to a second adjustment operation acting on the frame size adjustment interface. After the displaying, in a second area of the frame size adjustment interface, a preview image of the target media content and a progress control, the rotation module is configured to in response to a third adjustment operation acting on the frame size adjustment interface, control the frame of the current material to rotate by a preset angle along a preset direction.

Furthermore, the editing apparatus for a media content provided by the present embodiment may further include a second ratio adjustment module. After the adjusting an aspect ratio of a current material to a target aspect ratio corresponding to the first adjustment operation, the second ratio adjustment module is configured to in response to a fourth adjustment operation acting on the frame size adjustment interface, adjust an aspect ratio of at least part of materials in the target media content other than the current material to the target aspect ratio.

In the above scheme, the interface display module 802 may be configured to: display a duration adjustment interface in response to the material type of the first material being a first type; and display a frame size adjustment interface in response to the material type of the first material being a second type.

The editing apparatus for a media content provided by the embodiment of the present disclosure can execute the editing method for a media content provided by any embodiment of the present disclosure, and has functional modules and beneficial effects corresponding to the editing method for a media content. For technical details not described in detail in the present embodiment, please refer to the editing method for a media content provided by any embodiment of the present disclosure.

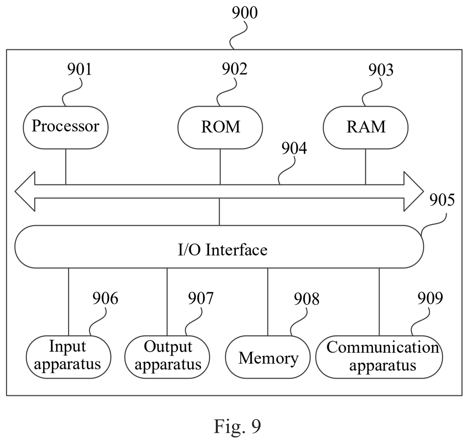

Reference is made to Fig. 9 below, which is a structural schematic diagram of an electronic device 900 (such as a terminal device in Fig. 9) suitable for implementing embodiments of the present disclosure. The terminal device in this embodiment of the present disclosure may include, but is not limited to, mobile terminals such as a mobile phone, a notebook computer, a digital broadcast receiver, a personal digital assistant (PDA), a PAD (tablet computer), a portable multimedia player (PMP), and a vehicle-mounted terminal (such as a vehicle navigation terminal), and fixed terminals such as a digital TV and a desktop computer. The electronic device shown in Fig. 9 is merely an example, and shall not impose any limitation on the function and scope of use of the embodiments of the present disclosure.

As shown in Fig. 9, the electronic device 900 may include a processor 901 (e.g., a central processing unit or a graphics processing unit) that may perform a variety of appropriate actions and processing in accordance with a program stored in a read-only memory (ROM) 902 or a program loaded from a memory 508 into a random access memory (RAM) 903. The RAM 903 further stores various programs and data required for operations of the electronic device 900. The processor 901, the ROM 902, and the RAM 903 are connected to each other through a bus 904. An input/output (I/O) interface 905 is also connected to the bus 904.

Generally, the following apparatuses may be connected to the I/O interface 905: an input apparatus 906 including, for example, a touchscreen, a touchpad, a keyboard, a mouse, a camera, a microphone, an accelerometer, and a gyroscope; an output apparatus 907 including, for example, a liquid crystal display (LCD), a speaker, and a vibrator; the memory 908 including, for example, a tape and a hard disk; and a communication apparatus 909. The communication apparatus 909 may allow the electronic device 900 to perform wireless or wired communication with other devices to exchange data. Although Fig. 9 shows the electronic device 900 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded from a network through the communication apparatus 909 and installed, installed from the memory 908, or installed from the ROM 902. When the computer program is executed by the processor 901, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. **In** the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network (LAN), a wide area network (WAN), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: display, in an editing interface, a preview image of a first material in a target media content, where the target media content includes at least one material; and in response to a first trigger operation acting on the editing interface, display an adjustment interface, where the adjustment interface corresponds to a material type of the first material, the adjustment interface is configured to adjust at least one selected from a group including a duration and a frame size of at least part of materials in the target media content, the at least part of materials include the first material, and a material in the target media content includes at least one selected from a group including a video and a picture.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, Example 1 provides an editing method for a media content, which includes:
displaying, in an editing interface, a preview image of a first material in a target media content, where the target media content includes at least one material; and
in response to a first trigger operation acting on the editing interface, displaying an adjustment interface, where the adjustment interface corresponds to a material type of the first material, the adjustment interface is configured to adjust at least one selected from a group including a duration and a frame size of at least part of materials in the target media content, the at least part of materials include the first material, and a material in the target media content includes at least one selected from a group including a video and a picture.

According to one or more embodiments of the present disclosure, in Example 2 according to the method of Example 1, the displaying an adjustment interface includes at least one selected from a group including following:
displaying a duration adjustment interface, and displaying, in a first area of the duration adjustment interface, an edit track segment and/or a thumbnail of the at least part of materials, where the edit track segment is displayed in a collapsed state; and
displaying a frame size adjustment interface, and displaying, in a second area of the frame size adjustment interface, a preview image of the target media content and a progress control, where the progress control is configured to adjust preview progress of the target media content.

According to one or more embodiments of the present disclosure, in Example 3 According to the method of Example 2, after the displaying, in a first area of the duration adjustment interface, an edit track segment and/or a thumbnail of the at least part of materials, the method further includes:
in response to a second trigger operation for a first edit track segment, switching the first edit track segment from the collapsed state to an expanded state, and displaying, in a preset sub-area of the first area, the first edit track segment in the expanded state, where an edit track segment in the expanded state is used to adjust a duration of a material corresponding to the edit track segment in the expanded state.

According to one or more embodiments of the present disclosure, in Example 4 according to the method of Example 3, the edit track segment when in the collapsed state is displayed in a thumbnail style; and the switching the first edit track segment from the collapsed state to an expanded state, includes:
expanding a first thumbnail displayed by the first edit track segment in the collapsed state into a first thumbnail gallery, where the first thumbnail gallery corresponds to a plurality of key frames of a second material, and the second material is a material corresponding to the first edit track segment.

According to one or more embodiments of the present disclosure, in Example 5 according to according to the method of Example 4, user swipe switching is supported between a thumbnail gallery displayed by the edit track segment in the expanded state and a thumbnail displayed by the edit track segment in the collapsed state.

According to one or more embodiments of the present disclosure, in Example 6 according to the method of Example 3, the method further includes:
in response to the second trigger operation for the first edit track segment, cancelling displaying an edit track segment in the duration adjustment interface other than the first edit track segment; or
in response to the second trigger operation for the first edit track segment, adjusting a display position of an edit track segment in the duration adjustment interface other than the first edit track segment according to a display position of the first edit track segment.

According to one or more embodiments of the present disclosure, in Example 7 according to the method of Example 6, the adjusting a display position of an edit track segment in the duration adjustment interface other than the first edit track segment according to a display position of the first edit track segment, includes:
controlling an edit track segment positioned on a first side of the first edit track segment to move outside the preset sub-area in a first direction, and/or controlling an edit track segment positioned on a second side of the first edit track segment to move outside the preset sub-area in a second direction.

According to one or more embodiments of the present disclosure, in Example 8 according to the method of Example 3, after the displaying, in a preset sub-area of the first area, the first edit track segment in the expanded state, the method further includes:
in response to a third trigger operation, switching an edit track segment displayed in the preset sub-area from the first edit track segment to a second edit track segment, where the second edit track segment is an edit track segment corresponding to the third trigger operation, and the second edit track segment is displayed in the expanded state within the preset sub-area.

According to one or more embodiments of the present disclosure, in Example 9 according to the method of Example 8, the edit track segment when in the expanded state is displayed in a thumbnail gallery style, and the switching an edit track segment displayed in the preset sub-area from the first edit track segment to a second edit track segment, includes:
switching a first thumbnail gallery displayed in the preset sub-area to a second thumbnail gallery, where the first thumbnail gallery is a thumbnail gallery displayed when the first edit track segment is in the expanded state, and the second thumbnail gallery is a thumbnail gallery displayed when the second editing track is in the expanded state.

According to one or more embodiments of the present disclosure, in Example 10 according to the method of Example 8, the third trigger operation includes a preset swiping operation acting on the preset sub-area, a trigger operation for the second edit track segment, or a trigger operation acting on an associated sub-area corresponding to the second edit track segment, and the associated sub-area is a sub-area associated with the preset sub-area.

According to one or more embodiments of the present disclosure, in Example 11 according to the method of Example 2, a preset control is further displayed in the first area, and after the displaying, in a first area of the duration adjustment interface, an edit track segment and/or a thumbnail of the at least part of materials, the method further includes at least one selected from a group including following:
in response to a sequence adjustment operation acting on the duration adjustment interface, adjusting an arrangement sequence of the at least part of materials in the target media content, and cancelling displaying the preset control during an execution process of the sequence adjustment operation; and
cancelling displaying the preset control in response to the second trigger operation for the first edit track segment.

According to one or more embodiments of the present disclosure, in Example 12 according to according to the method of Example 2, the displaying, in a second area of the frame size adjustment interface, a preview image of the target media content and a progress control, includes at least one selected from a group including following:
in response to the target media content including only one material, displaying, in the second area of the frame size adjustment interface, a preview image of a first material and a first progress control, where the first progress control is configured to adjust preview progress of the first material; and
in response to the target media content including at least two materials, displaying, in the second area of the frame size adjustment interface, a preview image of a third material in the target media content and a second progress control, where the second progress control is configured to switch a current material previewed in the second area.

According to one or more embodiments of the present disclosure, in Example 13 according to the method of Example 12, the second area includes an image display area of the target media content.

According to one or more embodiments of the present disclosure, in Example 14 according to according to the method of Example 12, a second thumbnail corresponding to the at least part of materials is displayed in the second progress control, and the second thumbnail is used to trigger a preview image of displaying a corresponding material in the second area.

According to one or more embodiments of the present disclosure, in Example 15 according to the method of Example 14, after the displaying, in the second area of the frame size adjustment interface, a preview image of a third material in the target media content and a second progress control, the method further includes:
in response to a fourth trigger operation for a target thumbnail in the second progress control, displaying, in a second area of the frame size adjustment interface, a preview image of a fourth material, where the fourth material is a material corresponding to the target thumbnail.

According to one or more embodiments of the present disclosure, in Example 16 according to according to the method of Example 2, after the displaying, in a second area of the frame size adjustment interface, a preview image of the target media content and a progress control, the method further includes at least one selected from a group including following:
in response to a first adjustment operation acting on the frame size adjustment interface, adjusting an aspect ratio of a current material to a target aspect ratio corresponding to the first adjustment operation;
in response to a second adjustment operation acting on the frame size adjustment interface, mirroring a frame of the current material; and
in response to a third adjustment operation acting on the frame size adjustment interface, controlling the frame of the current material to rotate by a preset angle along a preset direction.

According to one or more embodiments of the present disclosure, in Example 17 according to the method of Example 16, after the adjusting an aspect ratio of a current material to a target aspect ratio corresponding to the first adjustment operation, the method further includes:
in response to a fourth adjustment operation acting on the frame size adjustment interface, adjusting an aspect ratio of at least part of materials in the target media content other than the current material to the target aspect ratio.

According to one or more embodiments of the present disclosure, in Example 18 according to the method of Example 1, the displaying an adjustment interface, includes:
in response to the material type of the first material being a first type, displaying a duration adjustment interface; and
in response to the material type of the first material being a second type, displaying a frame size adjustment interface.

According to one or more embodiments of the present disclosure, Example 19 provides an editing apparatus for a media content, which includes an image preview module and an interface display module.

The image preview module is configured to configured to display, in an editing interface, a preview image of a first material in a target media content, where the target media content includes at least one material.

The interface display module is configured to display an adjustment interface in response to a first trigger operation acting on the editing interface, where the adjustment interface corresponds to a material type of the first material, the adjustment interface is configured to adjust at least one selected from a group including a duration and a frame size of at least part of materials in the target media content, the at least part of materials include the first material, and a material in the target media content includes at least one selected from a group including a video and a picture.

According to one or more embodiments of the present disclosure, Example 20 provides an electronic device, which includes one or more processor and a memory.

The memory is configured to store one or more programs.

When the one or more programs are executed by the one or more processor, the one or more processor is caused to implement the editing method for a media content of any one of Examples 1-18.

According to one or more embodiments of the present disclosure, Example 21 provides a computer-readable storage medium. The computer-readable storage medium stores computer instructions, and when the computer instructions are executed by a processor, the processor implements the editing method for a media content of any one of Examples 1-18.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. An editing method for a media content, comprising:
displaying, in an editing interface, a preview image of a first material in a target media content, wherein the target media content comprises at least one material; and
in response to a first trigger operation acting on the editing interface, displaying an adjustment interface, wherein the adjustment interface corresponds to a material type of the first material, the adjustment interface is configured to adjust at least one selected from a group comprising a duration and a frame size of at least part of materials in the target media content, the at least part of materials comprise the first material, and a material in the target media content comprises at least one selected from a group comprising a video and a picture.

2. The method of claim 1, wherein the displaying an adjustment interface, comprises at least one selected from a group comprising following:
displaying a duration adjustment interface, and displaying, in a first area of the duration adjustment interface, an edit track segment and/or a thumbnail of the at least part of materials, wherein the edit track segment is displayed in a collapsed state; and
displaying a frame size adjustment interface, and displaying, in a second area of the frame size adjustment interface, a preview image of the target media content and a progress control, wherein the progress control is configured to adjust preview progress of the target media content.

3. The method of claim 2, wherein after the displaying, in a first area of the duration adjustment interface, an edit track segment and/or a thumbnail of the at least part of materials, the method further comprises:
in response to a second trigger operation for a first edit track segment, switching the first edit track segment from the collapsed state to an expanded state, and displaying, in a preset sub-area of the first area, the first edit track segment in the expanded state, wherein an edit track segment in the expanded state is used to adjust a duration of a material corresponding to the edit track segment in the expanded state.

4. The method of claim 3, wherein the edit track segment when in the collapsed state is displayed in a thumbnail style; and the switching the first edit track segment from the collapsed state to an expanded state, comprises:
expanding a first thumbnail displayed by the first edit track segment in the collapsed state into a first thumbnail gallery, wherein the first thumbnail gallery corresponds to a plurality of key frames of a second material, and the second material is a material corresponding to the first edit track segment.

5. The method of claim 4, wherein user swipe switching is supported between a thumbnail gallery displayed by the edit track segment in the expanded state and a thumbnail displayed by the edit track segment in the collapsed state.

6. The method of claim 3, further comprising:
in response to the second trigger operation for the first edit track segment, cancelling displaying an edit track segment in the duration adjustment interface other than the first edit track segment; or
in response to the second trigger operation for the first edit track segment, adjusting a display position of an edit track segment in the duration adjustment interface other than the first edit track segment according to a display position of the first edit track segment.

7. The method of claim 6, wherein the adjusting a display position of an edit track segment in the duration adjustment interface other than the first edit track according to a display position of the first edit track segment, comprises:
controlling an edit track segment positioned on a first side of the first edit track segment to move outside the preset sub-area in a first direction, and/or controlling an edit track segment positioned on a second side of the first edit track segment to move outside the preset area in a second direction.

8. The method of claim 3, wherein after the displaying, in a preset sub-area of the first area, the first edit track segment in the expanded state, the method further comprises:
in response to a third trigger operation, switching an edit track segment displayed in the preset sub-area from the first edit track segment to a second edit track segment, wherein the second edit track segment is an edit track segment corresponding to the third trigger operation, and the second edit track segment is displayed in the expanded state within the preset sub-area.

9. The method of claim 8, wherein the edit track segment when in the expanded state is displayed in a thumbnail gallery style, and the switching an edit track segment displayed in the preset sub-area from the first edit track segment to a second edit track segment, comprises:
switching a first thumbnail gallery displayed in the preset sub-area to a second thumbnail gallery, wherein the first thumbnail gallery is a thumbnail gallery displayed when the first edit track segment is in the expanded state, and the second thumbnail gallery is a thumbnail gallery displayed when the second editing track is in the expanded state.

10. The method of claim 8, wherein the third trigger operation comprises a preset swiping operation acting on the preset sub-area, a trigger operation for the second edit track segment, or a trigger operation acting on an associated sub-area corresponding to the second edit track segment, and the associated sub-area is a sub-area associated with the preset sub-area.

11. The method of claim 2, wherein a preset control is further displayed in the first area, and after the displaying, in a first area of the duration adjustment interface, an edit track segment and/or a thumbnail of the at least part of materials, the method further comprises at least one selected from a group comprising following:
in response to a sequence adjustment operation acting on the duration adjustment interface, adjusting an arrangement sequence of the at least part of materials in the target media content, and cancelling displaying the preset control during an execution process of the sequence adjustment operation; and
cancelling displaying the preset control in response to a second trigger operation for the first edit track segment.

12. The method of claim 2, wherein the displaying, in a second area of the frame size adjustment interface, a preview image of the target media content and a progress control, comprises at least one selected from a group comprising following:
in response to the target media content comprising only one material, displaying, in the second area of the frame size adjustment interface, a preview image of a first material and a first progress control, wherein the first progress control is configured to adjust preview progress of the first material; and
in response to the target media content comprising at least two materials, displaying, in the second area of the frame size adjustment interface, a preview image of a third material in the target media content and a second progress control, wherein the second progress control is configured to switch a current material previewed in the second area.

13. The method of claim 12, wherein the second area comprises an image display area of the target media content.

14. The method of claim 12, wherein a second thumbnail corresponding to the at least part of materials is displayed in the second progress control, and the second thumbnail is used to trigger a preview image of displaying a corresponding material in the second area.

15. The method of claim 14, wherein after the displaying, in the second area of the frame size adjustment interface, a preview image of a third material in the target media content and a second progress control, the method further comprises:
in response to a fourth trigger operation for a target thumbnail in the second progress control, displaying, in a second area of the frame size adjustment interface, a preview image of a fourth material, wherein the fourth material is a material corresponding to the target thumbnail.

16. The method of claim 2, wherein after the displaying, in a second area of the frame size adjustment interface, a preview image of the target media content and a progress control, the method further comprises at least one selected from a group comprising following:
in response to a first adjustment operation acting on the frame size adjustment interface, adjusting an aspect ratio of a current material to a target aspect ratio corresponding to the first adjustment operation;
in response to a second adjustment operation acting on the frame size adjustment interface, mirroring a frame of the current material; and
in response to a third adjustment operation acting on the frame size adjustment interface, controlling the frame of the current material to rotate by a preset angle along a preset direction.

17. The method of claim 16, wherein, after the adjusting an aspect ratio of a current material to a target aspect ratio corresponding to the first adjustment operation, the method further comprises:
in response to a fourth adjustment operation acting on the frame size adjustment interface, adjusting an aspect ratio of at least part of materials in the target media content other than the current material to the target aspect ratio.

18. The method of claim 1, wherein the displaying an adjustment interface, comprises:
in response to the material type of the first material being a first type, displaying a duration adjustment interface; and
in response to the material type of the first material being a second type, displaying a frame size adjustment interface.

19. An editing apparatus for a media content, comprising:
an image preview module, configured to display, in an editing interface, a preview image of a first material in a target media content, wherein the target media content comprises at least one material; and
an interface display module, configured to display an adjustment interface in response to a first trigger operation acting on the editing interface, wherein the adjustment interface corresponds to a material type of the first material, the adjustment interface is configured to adjust at least one selected from a group comprising a duration and a frame size of at least part of materials in the target media content, the at least part of materials comprise the first material, and a material in the target media content comprises at least one selected from a group comprising a video and a picture.

20. An electronic device, comprising:
at least one processor; and
a memory communicatively connected to the at least one processor;
wherein the memory stores computer program executable by the at least one processor, and the computer program is executed by the at least one processor, to cause the at least one processor to perform the editing method for a media content of any one of claims 1-18.

21. A computer-readable storage medium, wherein the computer-readable storage medium stores computer instructions, and when the computer instructions are executed by a processor, the processor is caused to implement the editing method for a media content of any one of claims 1-18.
